# EUROPEAN PATENT APPLICATION

(11) **EP 1 622 040 A2**
(43) Date of publication of application: **01.02.2006**
(21) Application number: 05254708.0
(22) Date of filing: 28.07.2005
(51) Int. Cl.: G06F 17/22

(54) **Apparatus and method for processing text data**

(30) Priority: 30.07.2004 KR 2004060117; 14.07.2005 KR 2005063765
(71) Applicant: SAMSUNG ELECTRONICS CO., LTD., Suwon-si, Gyeonggi-do (KR)
(72) Inventor: Jung, Kil-soo, 104-1401 Namsuwon, Doosan Apt., Hwaseong-gun Gyeonggi-do (KR); Rhyu, Sung-ryeul, Youngin-si Gyeonggi-do (KR)
(74) Representative: Brandon, Paul Laurence

(57) **Abstract**

Provided is a method and apparatus for processing text data according to attributes of the text data. The method includes extracting one of a plurality of script categories classified according to language attribute of the text data; and rendering the text data according to script information included in the extracted category. In the method, script category information classified by scripts is stored as language information that a text generator (324) included in a reproducing apparatus can process, and text data is processed using this language information, thereby preventing a waste of resources.

## Description

The present invention relates to processing text data, end more particularly but not exclusively, to a method and apparatus for processing text data recorded on an information storage medium according to attributes of the text data.

Text is converted into text data encoded in various languages and then stored in an information storage medium. When a user selects some of the text data encoded in various languages, a reproducing apparatus reads the selected text data, renders the selected text data using a text generator, and displays the rendered text data on a screen,

Since the text data encoded in various languages is stored in the information storage medium, the reproducing apparatus needs a lot of resources to process and display the text data. The information storage medium should also store information regarding languages that can be processed by the reproducing apparatus. Use of a text generator is not suited to a reproducing apparatus with limited resources, such as a consumer electronics apparatus. It is desirable for such apparatus to include a text generator dedicated for supported languages but without increasing manufacturing costs.

It is an aim of preferred embodiments of the present invention to provide a reproducing apparatus dedicated for certain languages that efficiently processes text data.

According to a first aspect of the present invention, there is provided a method of processing text data the method comprising: extracting one of a plurality of script categories classified according to language attribute of the text data; and rendering the text data according to script information included in the extracted category.

Each of the script categories may comprise a plurality of script information, and scripts may be used to process units of a plurality of Unicode symbols. The script may be a script used to express a character set in the Unicode.

The script categories may indicate information regarding languages supported by a reproducing apparatus. The script categories may be stored as system parameters of the reproducing apparatus.

According to a second aspect of the present invention, there is provided an information storage medium storing: text data encoded in a plurality of languages; and script category information classified according to a language attribute of the text data.

According to a third aspect of the present invention, there is provided an apparatus for processing text data, the apparatus comprising: an extractor arranged to extract one of a plurality of script categories classified according to a language attribute of the text data; and a text generator arranged to render the text data according to script information included in the extracted category.

According to a fourth aspect of the present invention, there is provided a reproducing apparatus comprising: a text data storing unit arranged to store text data encoded in a plurality of languages and script category information classified according to a language attribute of the text data; and a text data processing unit arranged to read the text data and render the text data according to script information included in the script category information.

According to a fifth aspect of the present invention, there is provided a computer-readable recording medium on which a program for executing a method of processing text data is recorded, the method including: extracting one of a plurality of script categories classified according to a language attribute of the text data; and rendering the text data according to script information included in the extracted category.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1A illustrates a process of processing and outputting text data using a text generator;
FIG. 1B illustrates a process of outputting text data when a bi-directional attribute value is "right-to-left";
FIG. 1C illustrates a process of rendering text data when the text generator includes Arabic script information to correctly display bundles of numbers and signs;
FIG. 1D illustrates a process of rendering text data when Hebrew script information is added to the text generator;
FIG. 2A and 2B illustrate information regarding language codes that can be processed by the text generator included in a reproducing apparatus based on scripts according to an embodiment of the present invention;
FIG. 3 is a block diagram of a reproducing apparatus according to an embodiment of the present invention; and
FIG. 4 is a flowchart illustrating a method of processing text data according to an embodiment of the present invention.

The present invention will now be described more fully with reference to the accompanying drawings, in which exemplary embodiments of the invention are shown.

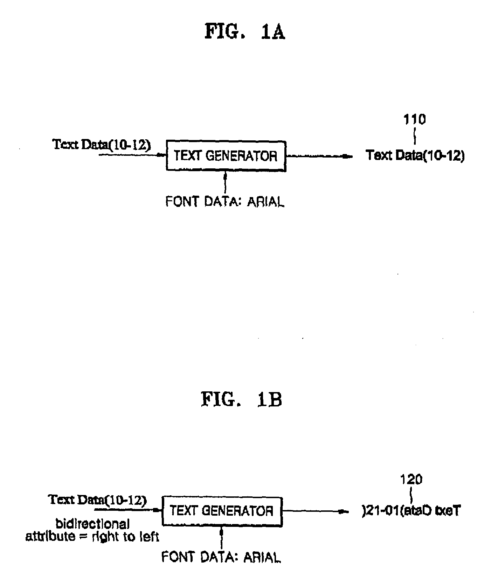

FIG. 1A illustrates a process of processing and outputting text data using a text generator. Referring to FIG. 1A, the text generator receives text data and font data, and renders and outputs the text data. For example, if the text data "Text Data (10-12)" is created in English and the font data of Arial font, the text generator processes the text data "Text Data (10-12)" using the Arial font. Then, the text data 110 "Text Data (10-12)" is displayed on a screen. Each component of the text data, for example, '(,' 'T,' '1,' or '-' is called a symbol, and various scripts may be generated according to how the text data is processed. For example, a "left-to-right" script is for displaying the text data from left to right, and an "Arabic" script is for processing a unit of numbers or signs at a time.

In other words, scripts may be included in the text generator of a reproducing apparatus as programs for executing a method of processing a plurality of symbols with the same attribute. Therefore, processing units of text data vary according to script information. While a font is applied to each symbol, a script is applied to a plurality of symbols with the same attribute.

In FIG. 1A, the text data "Text Data (10-12)" is rendered in units of symbols. Unless a certain attribute value is allocated when an information storage medium storing text data is manufactured, the "Text Data (10-12)" created in English has a "left-to-right" value as a bi-directional attribute value. As a result, the text data 110 "Text Data (10-12)" is output.

FIG. 1B illustrates a process of outputting text data when the bi-directional attribute value is "right-to-left". Since the text generator renders the text data 120 "Text Data (10-12)" in units of symbols, symbols are output one by one from right to left. As a result, ")21-01(ataD txeT" 120 is output as illustrated in FIG. 1B, When processed in units of symbols, numbers and signals are output incorrectly, whereas letters are output correctly. Therefore, the text generator includes attribute information, that is, scripts, to correctly display symbols with the same attribute.

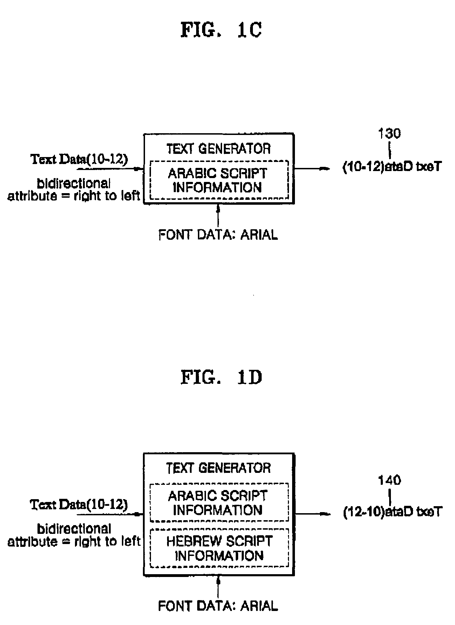

FIG. 1C illustrates a process of rendering the text data "Text Data (10-12)" when the text generator includes Arabic script information to correctly display bundles of numbers and signs. Referring to FIG. 1C, the text generator renders the text data "Text Data (10-12)" in units of scripts instead of symbols. Using the Arabic script information, the text generator renders numbers and signs in units of scripts. Hence, a word including numbers, for example, text data "(10-12)," is correctly displayed as "(10-12) ataD txeT" 130 as if the numbers and signs were regarded as one symbol.

FIG. 1D illustrates a process of rendering text data "Text Data (10-12)" when Hebrew script information is added to the text generator. In other words, if the text generator can process information regarding "Hebrew script," 10 and 12 are separately processed and thus displayed as "(12-10)", not "(10-12)". Consequently, "(12-10) ataD txeT" 140 is output.

As described above, the text generator renders text data in units of scripts instead of symbols. Therefore, the preferred embodiments of the present invention provide a text generator which has only language information that can be processed by the text generator, without requiring a lot of resources.

The text generator using script category information according does not require script information regarding all languages. The text generator only has to include script information regarding certain languages supported by a reproducing apparatus thereby allowing efficient use of the limited resources of the reproducing apparatus. In this way a reproducing apparatus supporting languages of certain areas may be provided more efficiently.

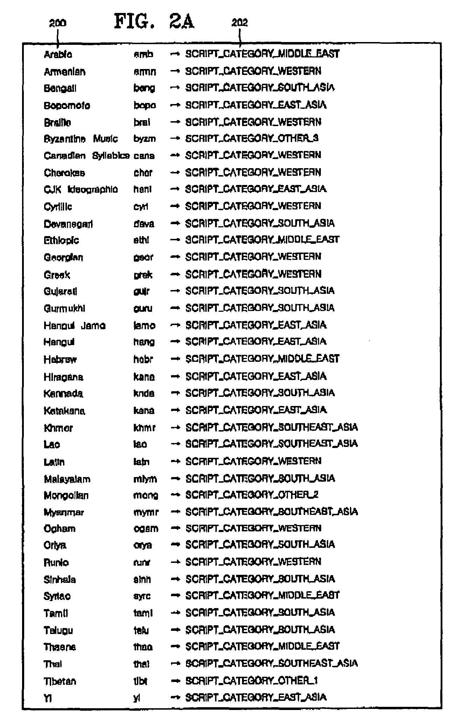

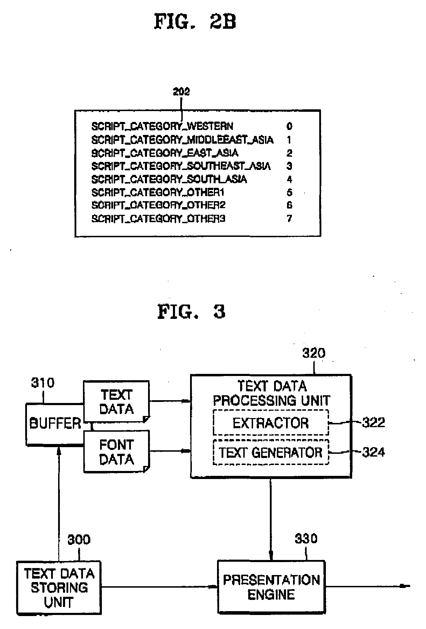

FIG. 2A and 2B illustrate information regarding language codes that can be processed by the text generator included in the reproducing apparatus based on scripts according to an embodiment of the present invention. Referring to FIG. 2A, a conventional reproducing apparatus includes language information 200 that it can process for each language. For example, text data created in Korean includes English, numbers, signs, Greek, and so on. Therefore, system parameters of the reproducing apparatus must have attribute information, i.e., script information, such as "Arabic," "Hangul," and "Greek" to process such various languages.

That is, text data created even in one language generally includes more than 100 types of script information as described above, thereby requiring a lot of resources of the reproducing apparatus. To solve this problem, in the present invention, language codes having the same script information are grouped into identical categories 202 as shown in FIG. 2A.

In this case, a script used to express a character set in Unicode is used. A script using a character set in the Unicode is illustrated in FIG. 2A. As illustrated in FIG. 2B, languages may be divided into about eight categories according to the types of scripts. Information indicating that the text generator in the reproducing apparatus can process at least one category is stored in the form of system parameters. Hence, all scripts included in a category can be processed.

When an information storage medium that stores text data created in a plurality of languages is reproduced by the reproducing apparatus, if a user selects a language, the reproducing apparatus identifies a script to use based on a Unicode value and determines whether the script can be rendered by the text generator with reference to the script information stored in the system parameters.

In addition, since script category information 202 corresponding to languages supported by the reproducing apparatus is designated by the system parameters of the reproducing apparatus and the text generator included in the reproducing apparatus only has to include script information corresponding to the designated category information 202, a reproducing apparatus for a language of a certain region may be provided using few resources.

FIG. 3 is a block diagram of a reproducing apparatus according to an embodiment of the present invention. Referring to FIG. 3, a text data processing unit 320 renders text data. The text data may be recorded on an information storage medium or in a memory Included in the reproducing apparatus. In FIG. 3, the information storage medium or the memory storing text data is represented as a text data storing unit 300.

A text data file corresponding to a moving image being reproduced and font data to be used when the text data is rendered are read from the text data storing unit 300 and stored in a buffer 310. The text data stored in the buffer 310 is transmitted to the text data processing unit 320, which parses information needed to render text. Further, caption text, font information, rendering style information, etc. used to render the text are transmitted to the text data processing unit 320. Then, the text data processing unit 320 renders the text data and creates a bitmap image. Also, the text data processing unit 320 designates an output start time and an output end time of each item of the text, generates output data, and transmits the output data to a presentation engine 330.

To this end, the text data processing unit 320 includes an extractor 322 extracting one of a plurality of script categories classified according to the language attribute of text and a text generator 324 rendering the text data according to script information included in an extracted category.

The presentation engine 330 combines the bitmap image of text data stored in the text data storing unit 300 with the text data rendered by the text data processing unit 320 and outputs the combination result to a display device.

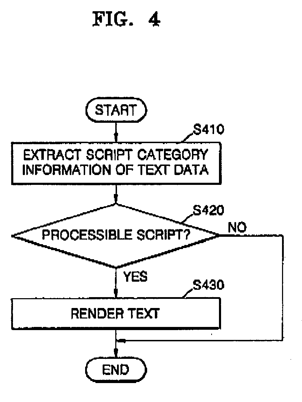

FIG. 4 is a flowchart illustrating a method of processing text data according to an embodiment of the present invention. Referring to FIG. 4, one of a plurality of script categories classified according to language attribute is extracted (S410). It is determined whether the extracted script category is a processable script category stored In system parameters of a reproducing apparatus (S420). If it is determined that the extracted script category can be processed by the reproducing apparatus, text data is rendered according to script information included in the extracted script category (S430). If it is determined that the extracted script category cannot be processed, the processing of the text data is terminated.

As described above, in embodiments of the present invention, script category information classified by scripts is stored as language information that a text generator included in a reproducing apparatus can process, and text data is processed using this language information, thereby preventing a waste of resources.

In addition, script category information corresponding to a language of a certain region supported by the reproducing apparatus is designated as a system parameter of the reproducing apparatus, and the text generator of the reproducing apparatus includes script information included in the designated script category information only. Therefore, a text generator for a language of a certain region can be provided in a reproducing apparatus with limited resources.

In addition, a reproducing apparatus supporting a language of a certain region more efficiently can be provided.

The present invention can also be implemented as computer-readable code on a computer-readable recording medium. Code and code segments for accomplishing the present invention can be easily construed by programmers skilled in the art to which the present invention pertains.

The computer-readable recording medium is any data storage device that can store data which can be thereafter read and executed by a computer. Examples of the computer-readable recording medium include magnetic recording mediums, optical recording mediums, and carrier waves.

The computer-readable recording medium can also be distributed over network-coupled computer systems so that the computer-readable code is stored and executed in a distributed fashion.

While the present invention has been particularly shown and described with reference to exemplary embodiments thereof, it will be understood by those of ordinary skill in the art that various changes in form and details may be made therein without departing from the scope of the present invention as defined by the following claims.

Attention Is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of processing text data, the method comprising:
extracting one of a plurality of script categories classified according to language attribute of the text data; and
rendering the text data according to script information included in the extracted category.

2. The method of claim 1, wherein each of the script categories comprises a plurality of script information, and scripts are used to process units of a plurality of Unicode symbols.

3. The method of claim 1 or 2, wherein the script is a script used to express a character set in the Unicode.

4. The method of claim 1, 2 or 3wherein the script categories indicate information regarding languages supported by a reproducing apparatus.

5. The method of claim 1, 2, 3 or 4, wherein the script categories are stored as system parameters of the reproducing apparatus.

6. An information storage medium storing:
text data encoded in a plurality of languages; and script category information classified according to a language attribute of the text data.

7. The medium of claim 6, wherein the script category information comprises a plurality of script information, and scripts are used to process units of a plurality of Unicode symbols.

8. The medium of claim 7 or 8, wherein the script is a script used to express a character set in the Unicode.

9. The medium of claim 6, 7, or 8 wherein the script category information Indicates information regarding languages supported by a reproducing apparatus.

10. The medium of claim 6, 7, 8 or 9, wherein the script category information is stored as system parameters of the reproducing apparatus.

11. An apparatus for processing text data, the apparatus comprising:
an extractor (322) arranged to extract one of a plurality of script categories classified according to a language attribute of the text data; and
a text generator (324) arranged to render the text data according to script information included in the extracted category.

12. The apparatus of claim 11, wherein each of the script categories comprises a plurality of script information, and scripts are used to process units of a plurality of Unicode symbols.

13. The apparatus of claim 11 or 92, wherein the script is a script used to express a character set in the Unicode.

14. The apparatus of claim 11, 12 or 13 wherein the script categories indicate information regarding languages supported by a reproducing apparatus.

15. The apparatus of claim 11, 12, 13 or 14, wherein the script categories are stored as system parameters of the reproducing apparatus.

16. A reproducing apparatus comprising:
a text data storing unit (300) arranged to store text data encoded in a plurality of languages and script category information classified according to a language attribute of the text data; and
a text data processing unit (320) arranged to read the text data and render the text data according to script information included in the script category information.

17. The apparatus of claim 16, further comprising a system parameter storing unit arranged to store the script information that can be processed by the reproducing apparatus as system parameters.

18. A computer-readable recording medium on which a program for executing a method of processing text data is recorded, the method comprising:
extracting one of a plurality of script categories classified according to a language attribute of the text data; and
rendering the text data according to script information included in the extracted category.
